## Europäisches Patentamt

(19) **European Patent Office**

Office européen des brevets

(11) Publication number: **0 184 048**
**B1**

(12) # EUROPEAN PATENT SPECIFICATION

(45) Date of publication of patent specification: **05.10.88**

(51) Int. Cl.⁴: **C 10 L 1/18, C 08 F 210/02**

(21) Application number: **85114477.4**

(22) Date of filing: **14.11.85**

(54) **Terpolymers of ethylene, vinyl acetate and isobutylene useful as pour point depressants in distillate oils.**

(30) Priority: **06.12.84 US 678945**

(43) Date of publication of application:
**11.06.86 Bulletin 86/24**

(45) Publication of the grant of the patent:
**05.10.88 Bulletin 88/40**

(84) Designated Contracting States:
**BE DE FR GB IT NL**

(56) References cited:
**EP-A-0 045 342**
**EP-A-0 099 646**
**FR-A-2 061 457**
**US-A-4 178 951**

(73) Proprietor: **QUANTUM CHEMICAL CORPORATION**
**99 Park Avenue**
**New York, NY 10016 (US)**

(72) Inventor: **Fischer, Joseph**
**430 Tipton Court**
**Cincinnati Ohio (US)**

(74) Representative: **Patentanwälte Grünecker, Kinkeldey, Stockmair & Partner**
**Maximilianstrasse 58**
**D-8000 München 22 (DE)**

Courier Press, Leamington Spa, England.

**Description**

This invention relates to a terpolymer useful as a pour point depressant for distillate fuel oils and a distillate fuel oil composition comprising said terpolymer.

The serious concern over supplies of petroleum has led to increased interest in diesel engines for passenger automobiles because of their proven economy in operation. Distillate oil fuels for automotive use must be made suitable, in cold weather, for uninterrupted service. Pour point depressants to promote cold temperature pour are added by the producer of the distillate or may be sold in automobile supply outlets, for direct addition by the consumer. In either case, a clear pour point additive is desirable from a marketing standpoint. Often a multiadditive system is prepared which combines pour point effectiveness with other functions such as corrosion inhibition and detergency to reduce nozzle deposits.

The use of ethylene-vinyl acetate copolymers to improve the low temperature pour characteristics of distillate oils has long been known. US—A—3,048,479 describes the use of ethylene-vinyl acetate copolymers containing about 20 percent by weight vinyl acetate to improve the pour of distillate fuels. Such polymers are prepared in a solvent such as benzene at low pressures of around 551 kPa (800 psi) using ditertiary butyl peroxide. US—A—3,627,838 describes a process for manufacturing an ethylene-vinyl acetate copolymer containing 28 to 60 weight percent vinyl acetate where the monomers are reacted at a temperature of 138°C to 171°C (280°F to 340°F) under a pressure of 4826 to 13790 kPa (700 to 2000 psi) in a solvent with azo compounds or peroxides such as ditertiary butyl peroxide. Similar processes are described in US—A—3,126,364 and US—A—3,254,063. A further modification in the use of ethylene-vinyl acetate copolymers as pour depressants is shown in US—A—3,961,916 wherein two synthetic ethylene-vinyl acetate copolymers differing by at least 5 weight percent vinyl ester content are separately prepared and blended to produce a pour depressant additive.

A slightly different approach is disclosed in US—A—4,087,255, which describes the preparation of ethylene-vinyl acetate copolymers for use as pour point depressants by reacting the monomers in an inert solvent at relatively low temperatures (70° to 120°C) and pressures of 4826 to 20684 kPa (700 to 3000 psig). Polymers produced in this manner, having a molecular weight around 1000—2900 show reduced branching characterized by 2-methyl side branches per 100 methylene groups.

Other patents disclose the use of terpolymers of ethylene, vinyl acetate and monoolefinically unsaturated polymerizable monomers for use as pour point depressants. For example, US—A—3,467,597 discloses terpolymers of ethylene, vinyl acetate and butylenes. US—A—3,638,349 discloses copolymers of ethylene and vinyl acetate wherein up to 20% of the copolymer can be other polymerizable unsaturated monomers. US—A—4,178,950 discloses terpolymers of ethylenevinyl acetate-butylene prepared by solution polymerization and of a number average molecular weight of 5,000 to about 80,000, preferably 12,000 to about 60,000. EP—A—99646, US—A—4178951 and FR—A—2061457 disclose pour point depressants comprising ethylene, vinyl acetate and isobutylene. It is the object of the present invention to provide a terpolymer and a distillate fuel oil composition having better clarity compared to presently used EVA copolymers, which are hazy at room temperature, and which suffers no adverse effects insofar as compatibiltiy and response in distillate fuels.

The present invention relates to a terpolymer useful as a pour point depressant for distillate fuel oils, said terpolymer comprising ethylene, vinyl acetate and isobutylene, the isobutylene content being effective to provide a methyl/100 methylenes ratio in said terpolymer of from 2 to 15, as determined by proton NMR, characterized in that the number average molecular weight of said terpolymer is from about 400 to 1200, the weight average molecular weight of said terpolymer is from about 1500 to about 3000, and said terpolymer has a vinyl acetate content of from 30 to 45 weight percent, and the balance being ethylene.

The present invention also relates to a distillate fuel oil composition having improved pour and flowability characteristics comprising a major proportion of a distillate fuel oil and an effective amount of said terpolymer.

In accordance with the present invention, polymers which are of improved clarity compared to presently used EVA copolymers (which are very hazy at room temperature) are provided. The clearer polymers of the present invention suffer no adverse effects insofar as compatibility and response in distillate fuels. They offer improved performance because the degree of branching can be controlled by blending or by direct synthesis. The polymers can be produced without the need for inert solvents, which must be removed before the product can be used.

It has been found that clear ethylene-vinyl acetate polymers can be produced by utilizing isobutylene as a monomer along with vinyl acetate. Since isobutylene is incorporated in the polymer chain, a terpolymer containing ethylene, vinyl acetate, and isobutylene is produced. The product, produced as described below, is a sparkling clear liquid at room temperature. When compared with an ethylene-vinyl acetate copolymer of similar viscosity and vinyl acetate content, the latter product is very hazy. Moreover, surprisingly, polymers with controlled amounts of the isobutylene terpolymer are found to be effective in lowering the pour point of distillate fuels while also possessing other requisite properties, such as good cold filter plugging point (CFPP) performance and good filterability. Specifically, ethylenevinyl acetate-isobutylene terpolymers with methyl per 100 methylene group ratios of 2 to 15, preferably 4 to 12, are found to perform better and have better clarity than copolymers of similar vinyl acetate content.

The ethylene-vinyl acetate-isobutylene terpolymers of the present invention are prepared by nonsolution, high pressure polymerization. In general these procedures involve free-radical polymerization in a stirred autoclave reactor designed to operate at high pressures of ethylene in a continuous manner. The ethylene pressure may vary from 68948 to 241317 kPa (10,000 psig to 35,000 psig), pressures of 131000 kPa to 206843 kPa (19,000 psig to 30,000 psig) are preferred. Vinyl acetate monomer is introduced into the aforesaid stirred autoclave reactor at a flow rate sufficient to produce a product containing 30 to 45 weight percent of combined vinyl acetate. The rate of isobutylene introduction depends on the rate of vinyl acetate introduction, and may range from 0.1 to 10 times the rate of vinyl acetate monomer flow rate to the reactor; flow rates of isobutylene to the reactor that are preferred will be 0.1 to 5 times the rate of vinyl acetate monomer flow rate. In addition, since the ethylene-vinyl acetate-isobutylene terpolymers of this invention are desirably of relatively low molecular weight, having a viscosity of 0.1 to 0.3 Pa · s (100 to 300 cP) as measured at 140°C in a Brookfield Thermosel viscometer, a suitable chain transfer agent may also be introduced into the reactor, despite the fact that isobutylene, in addition to acting as a monomer, also shows chain-transfer activity. Lower molecular weight methyl ketones and aldehydes are employed as chain transfer agents. Examples of the useful ketones are acetone, methyl ethyl ketone or methyl isobutyl ketone; examples of the useful aliphatic aldehydes are formaldehyde, acetaldehyde, propionaldehyde or isobutyraldehyde. Acetone and acetaldehyde are preferred, acetaldehyde being especially preferred.

When acetone is employed as chain transfer agent, its flow rate to the reactor will range from 0.3 to 1 times the flow rate of vinyl acetate monomer; a flow rate of 0.6 to 0.85 times the VA flow rate being preferred. When acetaldehyde is used as the chain transfer agent, its flow rate can be lower, from 0.01 to 0.3, preferably 0.04 to 0.1, times the flow rate of vinyl acetate monomer to the autoclave reactor.

The polymerization process of this invention is carried out at temperatures of about 107 to 246°C (225 to 475°F); a temperature of 121 to 232°C (250 to 450°F) is preferred. The temperature profile over the reactor may be held relatively constant or it may be relatively broad, as much as 66°C (150°F) in certain instances.

Free-radical initiators are employed in the process of the invention. In general, these are peroxygen compounds, for example, hydroperoxides, dialkyl peroxides, peroxyacids and esters of peroxy acids and typically, include tert-butyl hydroperoxide, di-tert-butyl peroxide, peracetic acid, tert-butyl peracetate, tert-butyl perisobutyrate, tert-butyl perpivalate (also known as pertrimethylacetate) tert-butyl peroctoate or di-sec-butyl peroxydicarbonate.

Preferred initiators are tert-butyl perpivalate, tert-butyl peroctoate and di-sec-butyl peroxydicarbonate. Two or more initiators may be used in a given polymerization.

When the polymerization process of this invention is performed as disclosed hereinabove, a terpolymer product is obtained that contains from 30 to 45 weight percent combined vinyl acetate, preferably from 30 to 40 weight percent vinyl acetate. The remainder of the terpolymer product will consist of ethylene and isobutylene of which ethylene makes up the major proportion. The isobutylene content is manifested largely in terms of a methyl to 100 methylenes ratio; as determined by proton nuclear magnetic resonance (proton NMR). A typical ethylene-vinyl acetate copolymer prepared by the process of this invention will exhibit a methyl to 100 methylenes ratio of 2, but terpolymers containing increasing combined isobutylene content will have methyl to 100 methylene ratios in the range of 2 to 15, preferably from 4 to 12. At higher methyl to 100 methylene ratios, the terpolymers of this invention are no longer effective as pour point depressants. Thus, the methyl to 100 methylene ratio is very critical.

The molecular weight of the terpolymers of the invention is also an important property in relation to their performance as pour point additives to distillate fuel oils. Molecular weights may be determined by vapor pressure osmometry or by size exclusion chromatography (SEC). Both number average molecular weights (Mn) and weight average molecular weights (Mw) may be determined for the products of this invention by the SEC method. The Mn of the useful terpolymers of this invention ranges from about 400 to about 1200, preferably from about 500 to about 900; while the Mw of these terpolymers ranges from about 1500 to about 3000, preferably from about 2000 to about 2500.

As pointed out hereinabove, the ethylene-vinyl acetate-isobutylene terpolymers of this invention are surprisingly found to exhibit improved clarity relative to ethylene-vinyl acetate copolymers of similar vinyl acetate content. In fact, the terpolymers of this invention, prepared under conditions that favor maximum incorporation of isobutylene, are transparent, viscous liquids but, unfortunately, do not sufficiently depress the pour point of distillate fuels. Only those with a methyl to 100 methylene ratio of 2 to 15, preferably 4 to 12, provide the desired pour point depressing action. Nevertheless, these latter ethylene-vinyl acetate-isobutylene terpolymers with controlled isobutylene content still possess greatly improved clarity relative to ethylene-vinyl acetate copolymers of similar vinyl acetate content, which are very hazy materials. Since pour point additives are generally handled and dispensed as concentrated solutions in a hydrocarbon solvent, said solutions of ethylene-vinyl acetate copolymers are also very hazy, whereas the corresponding solutions of the ethylene-vinyl acetate-isobutylene terpolymers of this invention, having controlled isobutylene contents to give methyl to 100 methylene ratios of 2 to 15, preferably 4 to 12, will exhibit greatly improved clarity.

The terpolymers of the present invention act as pour point depressants when effective amounts of the terpolymer are added to distillate fuel oils. Useful amounts of the terpolymer range from 100 to 1000, preferably 200 to 800 ppm by weight of the fuel oil being treated.

The terpolymers of this invention may be used alone or as the sole additive or in combination with other oil additives, such as corrosion inhibitors, antioxidants or sludge inhibitors.

3

The invention will be further understood by reference to the following examples.

Comparative Example 1

Ethylene and vinyl acetate were pumped to a stirred high pressure autoclave and reacted at a pressure of 206843 kPa (30,000 psig). The catalyst used was a t-butyl perpivalate. Temperature in the reactor was 166°C (331°F) at the bottom and 167°C (333°F) at the top. The vinyl acetate was pumped at a rate of 63 gal/h. Acetone (a chain transfer agent) was pumped, to give a low molecular weight polymer, at a rate of 47 gal/h. The final product had a vinyl acetate content of 36.3% and a viscosity of 0.163 Pa · s (163 cp) at 140°C. It was a very hazy liquid at room temperature.

This EVA copolymer was tested in a No. 2 fuel oil with a distillation range of 89°C to 160°C (193°F to 320°F). The ASTM D-97 pour point of the base fuel was −10°C. At a level of 200 ppm, this EVA copolymer reduced the pour point to −16°C. However, while the product showed good pour response in the fuel, it failed to satisfy the fluidity test at −28.9°C (−20°F) which is required for commercial products. The fluidity test measures the quantity of a premeasured amount (40 ml) of oil which flows through a small orifice in three minutes after being kept at the test temperature for two hours. A flow of 32 ml (80%) of the 40 ml aliquot of treated oil is required for a satisfactory rating. This product, when tested at a level of 900 ppm in oil gave only a 6 percent recovery. Hence, while it would act to depress the pour point, it was not satisfactory for commercial use.

Comparative Example 2

Ethylene and vinyl acetate were pumped to a stirred autoclave reactor designed to operate at high pressure. The reaction was carried out at 137895 kPa (20,000 psi) using t-butyl perpivalate as the catalyst. The feed gas temperature was 54°C (129°F) and the temperature in the reactor ranged from ranged from 197°C (327°F) at the bottom to 195°C (383°F) at the top. The vinyl acetate was pumped at 30 gallons per hour and isobutylene was added at about 95 gallons per hour to produce a low molecular weight terpolymer. The terpolymer product had a vinyl acetate content of 39.2%, a viscosity at 140°C of 0.402 Pa · s (402 cP) and a $CH_3/100\ CH_2$ ratio of 19.9, as determined by proton NMR. This product was water white and clear with no haze at room temperature.

When tested in number 2 fuel oil, the terpolymer gave no response. It was completely ineffective in lowering the pour point.

The remarkable clarity of the isobutylene terpolymer can be shown by comparing the haze readings with a typical EVA copolymer. Measurements were made using a Coleman Model 9 Nepho-Colorimeter which is designed to measure haze. Since these pour depressants are sold in solvent to make handling and dilution easier, the haze measurements were made in 50% solutions of the polymer in HiSol 10 solvent. The results were:

|  | EVA Copolymer | EVA Terpolymer (Example 2) |
|---|---|---|
| Haze-Nephelos units | 408 | 5.5 |

Example 1

A terpolymer, in accordance with the present invention, was prepared in the high pressure stirred autoclave by reacting ethylene and vinyl acetate with controlled amounts of isobutylene. The reactor pressure was 131000 kPa (19,000 psi) and temperature ranged from 134°C to 224°C (273°F to 436°F), bottom to top. The catalyst used was a di-sec-butyl peroxydicarbonate. The vinyl acetate was pumped at 102 gph (gallons per hour) and the isobutylene at 103 gph. The product had 35.6 percent vinyl acetate and a viscosity of 0.167 Pa · s (167 cP) at 140°C. The haze reading was 212 compared to 408 for the similar EVA copolymer. To further characterize the terpolymer, the $CH_3/100\ CH_2$ ratio was determined by proton NMR and found to be 4.9. The typical value for an EVA copolymer is 2.0. Molecular weights were determined by Size Exclusion Chromatography (SEC) and determined to be as follows: Mn=770, Mw=2100.

This product was tested in two different fuels with the following results:

|  |  | Pour point °C | |
|---|---|---|---|
|  | Base fuel | 100 ppm terpolymer | 300 ppm terpolymer |
| Fuel 1 | −13 | −28 | −32 |
| Fuel 2 | −10 | −22 | −32 |

These data show a good response when the additive was used in the fuel.

The terpolymer was tested for other important properties with the following results:

| Test | Base fuel 1 | Fuel 1+100 ppm terpolymer | Fuel 1+300 ppm terpolymer |
|---|---|---|---|
| Cold filter plugging point | −7°C | −14°C | −22°C |

| | Base fuel 2 | Fuel 2+100 ppm terpolymer | Fuel 2+300 ppm terpolymer |
|---|---|---|---|
| | −9°C | −16°C | −17°C |

| | % Recovery with terpolymer | | Base fuel |
|---|---|---|---|
| | 100 ppm | 200 ppm | |
| Fluidity test fuel 1 | 81 | 92 | 0 |

| | Flow-°C at 600 ppm terpolymer | Base fuel |
|---|---|---|
| Low temperature flow | −15 | −10 |

These results show that the terpolymer is an effective pour depressant under vehicle use conditions.

Example 2

A terpolymer was synthesized in the same equipment as Example 3 except that acetaldehyde was used as a modifier in addition to the isobutylene. The reactor temperature ranged from 135°C (275°F) at the bottom to 216°C (420°F) at the top. Pressure was 154423 kPa (22,400 psig). The catalysts used were di-sec-butyl peroxydicarbonate and t-butyl peroctoate. The VA feed rate was 105 gph; the isobutylene feed rate was 28 gph and the acetaldehyde feed rate was 7 gph. The product had a vinyl acetate content of 36.4% and a viscosity of 0.158 Pa · s (158 cP) at 140°C. The $CH_3/100\ CH_2$ ratio was 7.9. The sample was tested in fuel oil with the following results:

| Test | Result |
|---|---|
| CFPP | −24°C |
| Fluidity test | 82% |
| Low temperature flow test | −22°C |

The product meets the requirements for a commercial pour depressant additive.

## Claims

1. A terpolymer useful as a pour point depressant for distillate fuel oils, said terpolymer comprising ethylene, vinyl acetate and isobutylene, the isobutylene content being effective to provide a methyl/100 methylenes ratio in said terpolymer of from 2 to 15, as determined by proton NMR, characterized in that the number average molecular weight of said terpolymer is from about 400 to 1200, the weight average molecular weight of said terpolymer is from about 1500 to about 3000, and said terpolymer has a vinyl acetate content of from 30 to 45 weight percent, and the balance being ethylene.

2. The terpolymer of Claim 1 having a viscosity of from 0.1 to 0.3 Pa · s (100 to 300 cP) at 140°C.

3. The terpolymer of Claim 1 having a viscosity of from 0.13 to 0.23 Pa · s (130 to 230 cP) at 140°C.

4. The terpolymer of any Claims 1 to 3 having a vinyl acetate content of from 30 to 40 percent by weight.

5. The terpolymer of any of Claims 1 to 4 wherein the number average molecular weight is about 500 to about 900 and the weight average molecular weight is about 2000 to about 2500.

6. The terpolymer of any of Claims 1 to 5 having a methyl/100 methylenes ratio of 4 to 12 as determined by proton NMR.

7. A distillate fuel oil composition comprising a major proportion of a distillate fuel oil and an effective amount of the terpolymer of any Claims 1 to 6.

8. The composition of Claim 7 wherein the effective amount of said terpolymer is 100 to 1000 ppm by weight of said fuel oil.

9. The composition of Claim 7 wherein the effective amount of said terpolymer is 200 to 800 ppm by weight of said fuel oil.

**Patentansprüche**

1. Terpolymer, das als ein den Fließpunkt bzw. Pourpoint drückendes Mittel für Destillatheizöle geeignet ist, wobei das Terpolymer Ethylen, Vinylacetat und Isobutylen umfaßt, der Isobutylengehalt wirksam ist, um ein Verhältnis von Methyl/100 Methylene in dem Terpolymer von 2 bis 15 vorzusehen, bestimmt durch Protonen-NMR, dadurch gekennzeichnet, daß das zahlendurchschnittliche Molekulargewicht des Terpolymers etwa 400 bis 1200 beträgt, das gewichtsdurchschnittliche Molekulargewicht des Terpolymers etwa 1500 bis etwa 3000 beträgt und das Terpolymer einen Vinylacetatgehalt von 30 bis 45 Gew-% besitzt, wobei der Rest Ethylen ist.

2. Terpolymer nach Anspruch 1 mit einer Viskosität von 0,1 bis 0,3 Pa · s (100 bis 300 cP) bei 140°C.

3. Terpolymer nach Anspruch 1 mit einer Viskosität von 0,13 bis 0,23 Pa · s (130 bis 230 cP) bei 140°C.

4. Terpolymer nach einem der Ansprüche 1 bis 3, mit einem Vinylacetatgehalt von 30 bis 40 Gew.-%.

5. Terpolymer nach einem der Ansprüche 1 bis 4, worin das zahlendurchschnittliche Molekulargewicht etwa 500 bis etwa 900 und das gewichtsdurchschnittliche Molekulargewicht etwa 2000 bis etwa 2500 beträgt.

6. Terpolymer nach einem der Ansprüche 1 bis 5 mit einem Verhältnis von Methyl/100 Methylene von 4 bis 12, bestimmt durch Protonen-NMR.

7. Destillatheizölzusammensetzung, umfassend einen größeren Teil eines Destillatheizöls und eine wirksame Menge des Terpolymers nach einem der Ansprüche 1 bis 6.

8. Zusammensetzung nach Anspruch 7, worin die wirksame Menge des Terpolymers 100 bis 1000 ppm des Gewichts des Heizöls beträgt.

9. Zusammensetzung nach Anspruch 7, worin die wirksame Menge des Terpolymers 200 bis 800 ppm des Gewichts des Heizöls beträgt.

**Revendications**

1. Terpolymère utile comme additif abaissant le point d'écoulement pour les fuel-oils de distillation, ledit terpolymère comprenant de l'éthylène, de l'acétate de vinyle et de l'isobutylène, la teneur en isobutylène étant efficace pour donner un rapport méthyle/100 méthylène dans ledit terpolymère allant de 2 à 15, tel que déterminé par la RMN du proton, caractérisé par le fait que la masse moléculaire moyenne en nombre dudit terpolymère va d'environ 400 à 1200, la masse moléculaire moyenne en poids dudit terpolymère va d'environ 1500 à environ 3000, et ledit terpolymère présente une teneur en acétate de vinyle allant de 30 à 45% en poids, le complement étant constitué par de l'éthylène.

2. Terpolymère selon la revendication 1 présentant une viscosité allant de 0,1 à 0,3 Pa · s (100 à 300 cP) à 140°C.

3. Terpolymère selon la revendication 1 présentant une viscosité allant de 0,13 à 0,23 Pa · s (130 à 230 cP) à 140°C.

4. Terpolymère selon l'une des revendications 1 à 3, présentant une teneur en acétate de vinyle allant de 30 à 40 pour cent en poids.

5. Terpolymère selon l'une des revendications 1 à 4, dans lequel la masse moléculaire moyenne en nombre va d'environ 500 à environ 900, et la masse moléculaire moyenne en poids va d'environ 2000 à environ 2500.

6. Terpolymère selon l'une des revendications 1 à 5, présentant un rapport méthyle/100 méthylène allant de 4 à 12, tel que déterminé par la RMN du proton.

7. Composition de fuel-oil de distillation comprenant une proportion majeure d'un fuel-oil de distillation et une quantité efficace du terpolymère tel que défini à l'une des revendications 1 à 6.

8. Composition selon la revendication 7, dans laquelle la quantité efficace dudit terpolymère va de 100 à 1000 ppm en poids dudit fuel-oil.

9. Composition selon la revendication 7, dans laquelle la quantité efficace dudit terpolymère va de 200 à 800 ppm en poids dudit fuel-oil.